# EUROPÄISCHE PATENTSCHRIFT

(11) **EP 0 441 989 B1**
(45) Veröffentlichungstag und Bekanntmachung des Hinweises auf die Patenterteilung: **24.11.1993**
(21) Anmeldenummer: 90102520.5
(22) Anmeldetag: 08.02.1990
(51) Int. Cl.: A47J 31/06, A47J 31/40, C08K 3/34, A47J 36/04

(54) **Brüheinrichtung für eine Kaffeemaschine**
Brewing device for a coffee machine
Dispositif-infuseur pour machine à café

(43) Veröffentlichungstag der Anmeldung: 21.08.1991
(73) Patentinhaber: WMF WÜRTTEMBERGISCHE METALLWARENFABRIK AG, 73304 Geislingen (DE)
(72) Erfinder: Göckelmann, Karl, D-7921 Gerstetten (DE); Geiger, Rudi, Dipl.-Ing.(FH), D-7329 Weissenstein (DE)
(74) Vertreter: Grünecker, Kinkeldey, Stockmair & Schwanhäusser Anwaltssozietät

(56) Entgegenhaltungen:
- DE-A- 2 856 547
- DE-A- 2 919 523
- DE-B- 2 543 227

## Beschreibung

Die Erfindung bezieht sich auf eine Brüheinrichtung für eine Kaffeemaschine der im Oberbegriff von Anspruch 1 erläuterten Art.

Eine derartige Brüheinrichtung ist aus der DE-PS 25 43 227 bekannt. Die bekannte Brüheinrichtung enthält ein Schließglied, das auf der Oberseite eines Gehäuses der Brühkammer verschiebbar ist. Zu diesem Zweck ist an der Brühkammer ein die Öffnung der Brühkammer umgebender Ringflansch angeordnet, der von Führungen des Schließgliedes übergriffen wird. Zur Abdichtung enthält das Schließglied eine in Richtung der Brühkammer offene Ausnehmung, in der eine Kolbenplatte untergebracht ist. Die Querschnittsfläche der Ausnehmung ist größer als die Querschnittsfläche der Öffnung der Brühkammer und etwa gleich groß wie die Kolbenplatte. Die Dicke der Kolbenplatte ist jedoch kleiner als die Tiefe der Ausnehmung. Befindet sich das Schließglied in seiner die Öffnung verschließenden Stellung, so liegt somit die Kolbenplatte auf dem Ringflansch um die Öffnung der Brühkammer auf, wahrend sich zwischen der der Brühkammer abgewandten Oberseite der Kolbenplatte und dem Grund der Ausnehmung ein Spalt befindet. In diesen Spalt mündet die Heißwasserleitung zum Zuführen des heißen Brühwassers unter Druck, wobei sich in der Kolbenplatte mit dieser Einmündung fluchtende Durchtrittsöffnungen befinden, durch die das heiße Brühwasser in die Brühkammer geleitet werden kann. In dem auf dem Ringflansch aufliegenden Oberflächenbereich der Kolbenplatte ist ein Dichtring von rundem Querschnitt in eine Nut derart eingelassen, daß er noch über die Oberfläche der Kolbenplatte vorsteht. Der Dichtring ist etwas zur Mitte versetzt angeordnet, so daß die sich innerhalb des Dichtringes befindende Oberfläche der Kolbenplatte kleiner ist als die am Spalt anliegende Oberfläche. Auf diese Weise wirkt die Kolbenplatte als Differentialkolben, bei dem unter der Wirkung des Heißwasserdruckes die Dichtung gegen den als Dichtsitz wirkenden Ringflansch gedrückt wird. Um jedoch als Differentialkolben zu wirken, darf zwischen dem Dichtring und seinem Dichtsitz auf dem Ringflansch kein Spalt verbleiben, der einen Druckausgleich bei Beginn der Heißwasserzufuhr über die gesamte Unterseite der Kolbenplatte erlaubt. Dies bedeutet, daß der Dichtring bei jeder Bewegung des Schließgliedes, belastet durch das Gewicht der Kolbenplatte, auf dem Ringflansch gleitet, was sich nachteilig auf seine Lebensdauer auswirkt und darüber hinaus zusätzliche Reibung verursacht. Auch stört der überstehende Dichtring, falls haftengebliebenes Kaffeemehl von der Unterseite des Schließgliedes entfernt werden muß. Eventuell verwendete Kratzinstrumente können hängenbleiben und den Dichtring beschädigen. Der Dichtring kann herausfallen und verlorengehen. Weiterhin muß der Dichtring bei der Bewegung des Schließgliedes über die Kante des Ringflansches gehoben werden, wobei die Gefahr seiner Beschädigung weiter erhöht wird.

Der Erfindung liegt somit die Aufgabe zugrunde, eine Brüheinrichtung der genannten Art konstruktiv so auszugestalten, daß die Lebensdauer der Dichtung erhöht wird.

Die Aufgabe wird durch die kennzeichnenden Merkmale des Anspruches 1 gelöst.

Durch die erfindungsgemäße Ausgestaltung kann die wirksame Oberfläche der Dichtung bis zur oder gar hinter die Oberfläche des Schließgliedes zurückversetzt angeordnet werden, so daß die Dichtung weder während des Reinigungsvorganges der Unterseite des Schließgliedes noch während einer Bewegung des Schließgliedes beschädigt werden kann. Trotzdem wird die gewünschte Dichtwirkung sofort erzielt, sobald das heiße Brühwasser zum Einleiten eines Brühvorganges zugeführt wird.

Durch die Ausgestaltung nach Anspruch 2 kann das Heißwasser der Druckkammer auf konstruktiv einfache Weise zugeführt werden.

Durch den in Anspruch 3 angegebenen Querschnitt erhält die Dichtung eine besonders gute Fähigkeit zum Auswölben.

Die Maßnahme nach Anspruch 4 erleichtert das Anlegen der Dichtung am Anfang des Brühvorganges.

Anspruch 5 beschreibt eine konstruktiv besonders einfache Ausgestaltung des Druckminderers.

Besonders vorteilhaft ist die Erfindung bei einer Brüheinrichtung mit gemäß Anspruch 6 verschiebbarem Schließglied einsetzbar, da dadurch sowohl der Abrieb der Dichtung als auch die Reibungskräfte herabgesetzt werden kann.

Durch die Ausgestaltung der Ansprüche 7 und 8 wird die Montage und gegebenenfalls der Austausch der Dichtung wesentlich erleichtert.

Ein Ausführungsbeispiel der Erfindung wird nachfolgend anhand der Zeichnungen näher erläutert. Es zeigen:
Figur 1 einen Längsschnitt durch eine erfindungsgemäß ausgestaltete Brüheinrichtung,
Figur 2 eine herausvergrößerte Darstellung des Details A aus Figur 1, und
Figur 3 eine Darstellung ähnlich Figur 2 mit angelegter Dichtung.

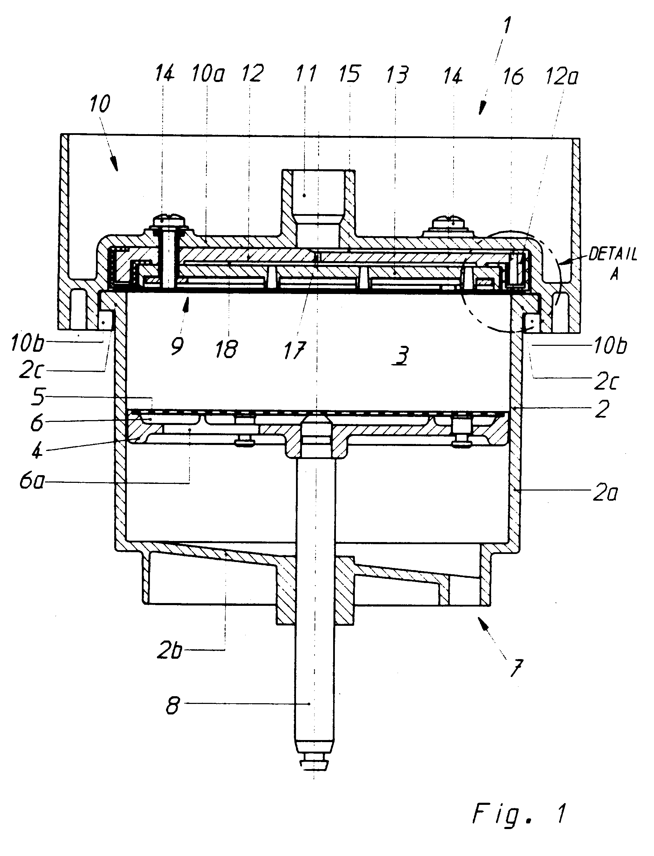

Aus Figur 1 ist eine Brüheinrichtung 1 ersichtlich, wie sie in herkömmlichen Kaffeemaschinen, beispielsweise automatisch oder halbautomatisch arbeitenden Kaffeemaschinen, zu verwenden ist. Die Brüheinrichtung 1 weist eine in einem Gehäuse 2 untergebrachte Brühkammer 3 auf, deren Volumen durch einen auf und ab bewegbaren Kolben 4 vergrößert oder verkleinert werden kann. An der der Brühkammer zugewandten Oberseite des Kolbens 4 ist ein Brühsieb 5 befestigt, dessen Öffnungen mit einer im Kolben 4 vorgesehenen Getränkesammelkammer 6 und über Öffnungen 6a mit der Unterseite des Kolbens 4 in Verbindung stehen. Das Gehäuse 2 enthält einen Boden 2b, der in Richtung auf eine Kaffeeauslauföffnung 7 geneigt ist. Die Kaffeeauslauföffnung 7 ist in bekannter Weise mit einem nicht dargestellten Auslauf der Kaffeemaschine verbunden. Der Kolben 4 wird über eine Kolbenstange 8 von einem ebenfalls nicht dargestellten, üblichen Getriebe bewegt.

Das Gehäuse 2 enthält an seiner dem Boden 2b abgewandten Seite eine Öffnung 9, die von einem Ringflansch 2c des Gehäuses 2 umgeben ist. Über der Öffnung 9 ist ein Schließglied 10 vorgesehen, das ein im wesentlichen napfförmiges Gehäuse 10a aufweist und mit seitlichen Führungen 10b den Ringflansch 2c an zwei gegenüberliegenden Seiten der Öffnung 9 derart untergreift, daß das Schließglied 10 in einer Richtung senkrecht zur Zeichnungsebene gegenüber der Brühkammer 3 verschoben werden kann. Das napfförmige Gehäuse 10a des Schließgliedes 10 wird von einer Heißwasserleitung 11 durchragt, die in üblicher Weise mit einem nicht gezeichneten Heißwasserbehälter bzw. -bereiter der Kaffeemaschine verbunden wird. Im napfförmigen Gehäuse 10a des Schließgliedes 10 ist eine ebenfalls napfförmige Druckmindererplatte 12 und in dieser eines der üblichen Heißwasser-Verteilsiebe 13 angeordnet. Die Druckmindererplatte 12 und das Verteilsieb 13 werden durch Schrauben 14 fest mit dem napfförmigen Gehäuse 10a verspannt. Die napfförmige Druckmindererplatte 12 weist einen in Richtung auf die Brühkammer vorstehenden Rand 12a auf, der sich im wesentlichen oberhalb des Ringflansches 2c befindet, wenn das Schließglied 10 die Öffnung 9 verschließt.

An der dem Gehäuse 10a zugewandten Oberseite der Druckmindererplatte 12 ist eine Rinne 15 angeordnet, die sich von der Heißwasserleitung 11 bis in den Bereich des Randes 12a erstreckt und dort in eine Bohrung 16 mündet, die den Rand 12a in Richtung auf den Ringflansch 2c durchsetzt.

In der Druckmindererplatte 12 ist weiterhin eine Öffnung 17 vorgesehen, die von der Heißwasserleitung 11 in einen Heißwasser-Verteilraum 18 führt, der oberhalb des Verteilsiebes 13 vorgesehen ist und sich über fast die gesamte Oberfläche des Verteilsiebes 13 erstreckt. Der Querschnitt der Öffnung 17 ist wesentlich kleiner als der Querschnitt der Heißwasserleitung 11, so daß die Öffnung 17 als Druckmindereröffnung beim übertritt des Heißwassers von der Heißwasserleitung 11 in den Verteilraum 18 und von dort in die Brühkammer 3 wirkt, während die Rinne 15 und somit die Bohrung 16 mit dem vollen Heißwasserdruck beaufschlagt wird.

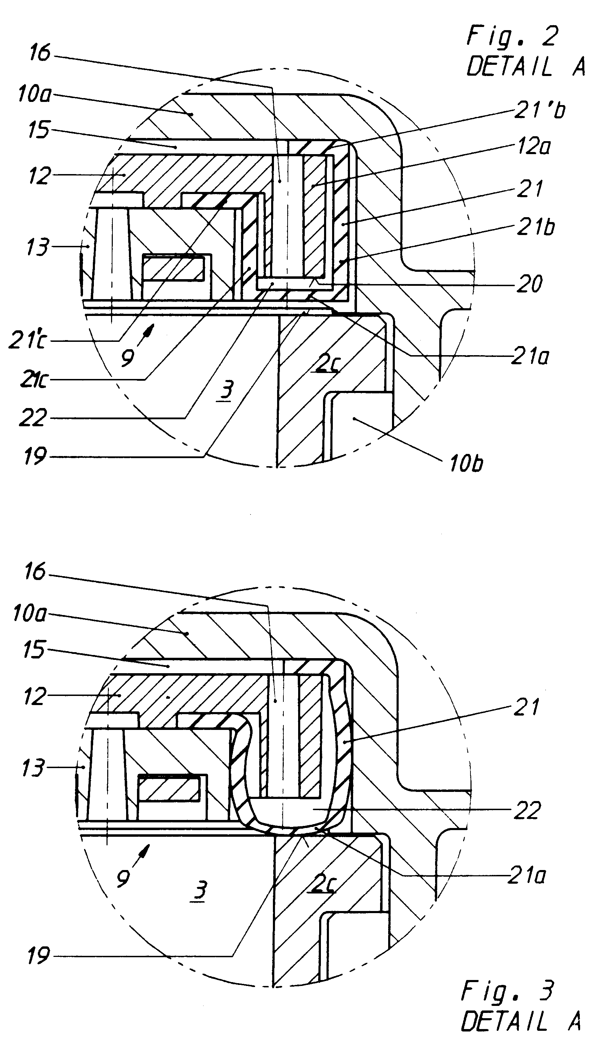

Wie die herausvergrößerte Einzeldarstellung in Figur 2 zeigt, ist der Rand 12a der Druckmindererplatte 12 etwas gegenüber der der Brühkammer 3 anliegenden Oberfläche des Verteilsiebes 13 zurückversetzt, so daß zwischen einer als Dichtsitz 19 ausgebildeten, in Richtung des Schließgliedes 10 weisenden Oberfläche des Ringflansches 2c und einer in Richtung auf den Dichtsitz 19 weisenden, von der Bohrung 16 durchragten Oberfläche 20 des Randes 12a ein Spalt verbleibt. In diesem Spalt ist eine als dünne, flexible Membran ausgebildete Dichtung 21 angeordnet. Die Dichtung 21 weist einen im wesentlichen U-förmigen Querschnitt mit einem in nicht dichtender Stellung geradlinig verlaufenden, unteren Steg 21a und zwei aufrechten Schenkeln 21b und 21c auf. Der untere Steg 21a überdeckt die Ausmündung der Bohrung 16. Einer der Schenkel 21b verläuft mit beidseitigem Abstand zwischen dem Rand 12a und dem napfförmigen Gehäuse 10a in das Gehäuse 10a hinein und endet in einem Befestigungsflansch 21'b, der zwischen der Druckmindererplatte 12 und dem Gehäuse 10a eingeklemmt ist. Der andere Schenkel 21c erstreckt sich mit beidseitigem Abstand zwischen dem Rand 12a und dem Verteilsieb 13 nach oben und endet in einem Befestigungsflansch 21'c, der in einer Nut aufgenommen und zwischen dem Verteilsieb 13 und der Druckmindererplatte 12 festgeklemmt ist.

Der Steg 21a ist im Spalt derart angeordnet, daß seine in Richtung des Dichtsitzes 19 weisende Oberfläche nicht über die der Brühkammer 3 anliegende Oberfläche des Verteilsiebes 13 vorsteht und in nicht dichtender Stellung einen Abstand zum Dichtsitz 19 aufweist. Zwischen dem Steg 21a und der Oberfläche 20 ist ein weiterer Abstand vorgesehen, der als Dichtkammer 22 dient. Wie gezeichnet, kann sich der Steg 21a mit einem Bereich, der kleiner als die Hälfte seiner Breite ist, über der Brühkammer 3 befinden. Die Dichtung 21 erstreckt sich jedoch als kompletter Ring um den gesamten Umfang der Öffnung 9. Je nach den konstruktiven Möglichkeiten, kann lediglich eine einzige Rinne 15 und eine einzige Bohrung 16 vorgesehen sein, wobei sich jedoch die Dichtkammer 22 rings um die Öffnung 9 erstreckt.

Das während eines Brühvorganges über die Heißwasserleitung 11 unter Druck herangeführte, heiße Brühwasser gelangt zunächst über die Rinne 15 und die Bohrung 16 in die Dichtkammer 22 und beaufschlagt insbesondere den Steg 21a mit dem erhöhten Brühdruck. Der Brühdruck wölbt in der in Figur 3 gezeichneten Weise den Steg 21a der Dichtung 21 rund um die Öffnung 9 aus, so daß er sich an die Dichtfläche 19 abdichtend anlegt.

Die Öffnung 17 wirkt als Blende, die nur einen langsamen übertritt des Brühwassers in die Brühkammer 3 erlaubt. Da in der Brühkammer 3 auch der Kaffeeauslauf 7 für einen gewissen Druckabbau sorgt, ist sichergestellt, daß der Druck in der Dichtkammer 22, zumindest während des Brühvorganges, den Druck in der Brühkammer 3 übersteigt. Wird die Zufuhr des Heißwasser nach Beendigung des Brühvorganges abgestellt, so kann sich der Druck in der Dichtkammer 22 über die Öffnung 17 abbauen, so daß sich der Steg 21a unter Wirkung seiner Eigenelastizität aus der in Figur 3 gezeigten Stellung in die in Figur 2 gezeigte Stellung zurückbewegt.

In Abwandlung des beschriebenen und gezeichneten Ausführungsbeispiels kann die Dichtung beispielsweise auch am Gehäuse angeordnet und der Dichtsitz am Schließglied vorgesehen sein. Auch ein abweichender Querschnitt bzw. eine Profilierung der Dichtung ist denkbar, solange eine Dichtwirkung durch eine Auswölbung sichergestellt ist. Die Druckmindererplatte kann weiterhin mehrere Öffnungen aufweisen, wobei jedoch deren Gesamtquerschnitt kleiner sein muß als der Querschnitt der Heißwasserleitung. Obwohl die erfindungsgemäße Dichtung bei Verwendung in einer Brüheinrichtung mit verschiebbarem Schließglied besonders vorteilhafte Wirkungen zeigt, kann sie auch bei anders konstruierten Brüheinrichtungen, beispielsweise mit einem absenkbaren und von oben auf die Brühkammer auflegbaren Schließglied eingesetzt werden.

## Patentansprüche

1. Brüheinrichtung (1) für eine Kaffeemaschine mit einer Brühkammer (3), die in einem an einer Stirnseite mit einer Öffnung (9) versehenen Gehäuse (2) angeordnet ist, mit einem Schließglied (10) zum Verschließen der Öffnung (9), mit einer Heißwasserleitung (11) zum Zuführen von Brühwasser unter Druck in die Brühkammer (3) und mit einer zwischen dem Schließglied (10) und dem Gehäuse (2) angeordneten, sich um die Öffnung (9) erstreckenden Dichtung, die zum Abdichten der Öffnung (9) vom Druck des Brühwassers gegen einen Dichtsitz (19) preßbar ist, **dadurch gekennzeichnet,** daß die Dichtung (21) eine zwischen einer mit der Heißwasserleitung (11) verbundenen Dichtkammer (22) und dem Dichtsitz (19) angeordnete, durch den Druck auswölbbare und gegen den Dichtsitz (19) preßbare, flexible Membran aufweist.

2. Brüheinrichtung nach Anspruch 1, **dadurch gekennzeichnet**, daß die Dichtkammer (22) und die Dichtung (21) an dem zum Verschließen der Öffnung (9) bewegbaren Schließglied (10) angeordnet ist.

3. Brüheinrichtung nach Anspruch 1 oder 2, **dadurch gekennzeichnet**, daß die Dichtung (21) einen im wesentlichen U-förmigen Querschnitt mit einem Steg (21a) und zwei abstehenden Seitenschenkeln (21b, 21c) aufweist, und daß die Dichtkammer (22) durch zumindest den Steg (21a) begrenzt ist, wobei der Steg unter Auswölbung gegen den Dichtsitz (19) preßbar ist.

4. Brüheinrichtung nach einem der Ansprüche 1 bis 3, **gekennzeichnet durch** einen im Fließweg des Heißwassers stromabwärts der Dichtkammer (22) angeordneten Druckminderer (12, 17).

5. Brüheinrichtung nach Anspruch 4, **dadurch gekennzeichnet,** daß der Druckminderer mindestens eine Öffnung (17) umfaßt, deren Gesamtquerschnitt kleiner ist als der Querschnitt der Heißwasserleitung (11).

6. Brüheinrichtung nach einem der Ansprüche 1 bis 5, **dadurch gekennzeichnet,** daß das Schließglied (10) in einer parallel zur Öffnung (9) des Gehäuses (2) der Brühkammer (3) verlaufenden Ebene verschiebbar ist.

7. Brüheinrichtung nach einem der Ansprüche 1 bis 6, **dadurch gekennzeichnet,** daß die Dichtung (21) mittels eines ersten und eines zweiten Befestigungsflansches (21'b, 21'c) am Schließglied (10) befestigt ist.

8. Brüheinrichtung nach Anspruch 7, **dadurch gekennzeichnet,** daß bei einem ein napfförmiges Gehäuse (10a) mit einem im Inneren angeordneten Heißwasser-Verteilsieb (13) und einer Druckmindererplatte (12) enthaltenden Schließglied (10) der erste Befestigungsflansch (21'b) zwischen der Druckmindererplatte (12) und dem napfförmigen Gehäuse (10) und der zweite Befestigungsflansch (21'c) zwischen dem Heißwasser-Verteilsieb (13) und der Druckmindererplatte (12) eingeklemmt ist.

## Claims

1. Brewing device (1) for a coffee making machine with a brewing chamber (3) which is arranged in a housing (2) provided with an opening (9) at one end, with a closure member (10) for closing the opening (9), with a hot water pipe (11) for supplying brewing water under pressure to the brewing chamber (3) and with a seal which is arranged between the closure member (10) and the housing (2) and extends around the opening (9) and which can be pressed against a sealing seat (19) by the pressure of the brewing water to seal the opening (9), characterised in that the seal (21) comprises a flexible membrane which is arranged between a sealing chamber (22) connected to the hot water pipe (11) and the sealing seat (19), can be arched by the pressure and can be forced against the sealing seat (19).

2. Brewing device according to claim 1, characterised in that the sealing chamber (22) and the seal (21) are arranged on the closure member (10) which is movable to close the opening (9).

3. Brewing device according to claim 1 or 2, characterised in that the seal (21) has an essentially U-shaped cross-section with a web (21a) and two projecting side arms (21b, 21c), and in that the sealing chamber (22) is bounded by at least the web (21a), wherein the web can be forced against the sealing seat (19) while arching.

4. Brewing device according to any of claims 1 to 3, characterised by a pressure reducer (12, 17) arranged in the flow path of the hot water downstream of the sealing chamber (22).

5. Brewing device according to claim 4, characterised in that the pressure reducer includes at least one opening (17) of which the total cross-section is smaller than the cross-section of the hot water pipe (11).

6. Brewing device according to any of claims 1 to 5, characterised in that the closure member (10) is displaceable in a plane extending parallel to the opening (9) of the housing (2) of the brewing chamber (3).

7. Brewing device according to any of claims 1 to 6, characterised in that the seal (21) is mounted on the closure member (10) by means of first and second mounting flanges (21'b, 21'c).

8. Brewing device according to claim 7, characterised in that in a closure member (10) containing a cup-shaped housing (10a) with a hot water distributing screen (13) arranged inside and a pressure reducer plate (12), the first mounting flange (21'b) is clamped between the pressure reducer plate (12) and the cup-shaped housing (10) and the second mounting flange (21'c) is clamped between the hot water distributing screen (13) and the pressure reducer plate (12).

## Revendications

1. Dispositif infuseur (1) pour une machine à café, avec une chambre d'infusion (3) disposée dans un carter (2) pourvu en face frontale d'une ouverture (9), avec un organe de fermeture (10) destiné à obturer l'ouverture (9), avec une conduite d'eau chaude (11) destinée à l'amenée d'eau d'infusion sous pression dans la chambre d'infusion (3) et avec un joint d'étanchéité disposé entre l'organe de fermeture (10) et le carter (2) et s'étendant autour de l'ouverture (9), susceptible d'être pressé contre un siège d'étanchéité (19) en vue d'assurer l'isolation étanche à la pression de l'eau d'infusion de l'ouverture (9), caractérisé en ce que le joint d'étanchéité (21) présente une membrane flexible, disposée entre une chambre d'étanchéité (22) reliée à la conduite d'eau chaude (11) et le siège d'étanchéité (19), susceptible d'être incurvée sous l'effet de la pression et d'être pressée contre le siège d'étanchéité (19).

2. Dispositif infuseur selon la revendication 1, caractérisé en ce que la chambre d'étanchéité (22) et le joint d'étanchéité (21) sont disposés sur l'organe de fermeture (10) déplaçable en vue d'obturer l'ouverture (9).

3. Dispositif infuseur selon la revendication 1 ou 2, caractérisé en ce que le joint d'étanchéité (21) présente une section transversale sensiblement en forme de U, avec une nervure (21a) et deux branches latérales (21b, 21c) s'y raccordant, et en ce que la chambre d'étanchéité (22) est délimitée au moyen d'au moins la nervure (21), la nervure étant susceptible d'être comprimée contre le siège d'étanchéité (19) tout en s'incurvant.

4. Dispositif infuseur selon l'une des revendications 1 à 3, caractérisé par un détendeur de pression (12, 17) disposé dans le trajet d'écoulement de l'eau chaude, en aval de la chambre d'étanchéité (22).

5. Dispositif infuseur selon la revendication 4, caractérisé en ce que détendeur de pression comprend au moins une ouverture (17), dont la section transversale globale est inférieure à la section transversale de la conduite d'eau chaude (11).

6. Dispositif infuseur selon l'une des revendications 1 à 5, caractérisé en ce que l'organe de fermeture (10) est susceptible d'être déplacé dans un plan, s'étendant parallèlement à l'ouverture (9), du carter (2) de la chambre d'infusion (3).

7. Dispositifinfuseur selon l'une des revendications 1 à 6, caractérisé en ce que le joint d'étanchéité (21) est fixé sur l'organe de fermeture (10), au moyen d'une première et d'une deuxième bride de fixation (21'b, 21'c).

8. Dispositif infuseur selon la revendication 7, caractérisé en ce qu'en cas d'un carter (10a) en forme de godet, avec un tamis distributeur d'eau chaude (13) disposé à l'intérieur et d'un organe de fermeture (10) contenant une plaque de diminution de pression (12), la première bride de fixation (21'b) est enserrée entre la plaque de diminution de pression (12) et le carter en godet (10a) et la deuxième bride de fixation (21'c) est disposée entre le tamis distributeur d'eau chaude (13) et la plaque de diminution de pression (12).
